# EUROPEAN PATENT APPLICATION

(11) **EP 2 796 811 A1**
(43) Date of publication of application: **29.10.2014**
(21) Application number: 13165233.1
(22) Date of filing: 24.04.2013
(51) Int. Cl.: F25B 21/00

(54) **Magnetocaloric heat pump device, a heating or cooling system and a magnetocaloric heat pump assembly**

(71) Applicant: Technical University of Denmark, 2800 Kgs. Lyngby (DK)
(72) Inventor: Bahl, Christian R.H., 2800 Kgs. Lyngby (DK); Smith, Anders, 2800 Kgs. Lyngby (DK)
(74) Representative: Beck Greener

(57) **Abstract**

The invention provides a magnetocaloric heat pump device, comprising
a magnetocaloric bed; a magnetic field source, the magnetocaloric bed and the magnetic field source being arranged to move relative to each other so as to generate a magnetocaloric refrigeration cycle within the heat pump, wherein the magnetic field source includes both a permanent magnet and an electromagnet.

## Description

The present invention relates to a magnetocaloric heat pump device, a heating or cooling system and a magnetocaloric heat pump assembly.

As the demand for and cost of hydrocarbon fuels increase there is a need for improved and/or alternative sources of energy in both domestic and commercial environments. One such source is heat stored in the earth, which may be collected with the use of a so-called Ground Source Heat Pump (GSHP). GSHPs, referred to sometimes as geothermal heat pumps or ground heat pumps, are typically used in central heating and/or cooling systems and serve to pump heat to or from the ground.

Heat pumps are well known as devices for moving heat from a low temperature area or region to a high temperature area or region, by means of adding work, e.g. in the form of electricity. Current conventional heat pumps work on the vapour compression cycle and operate based on the heat developed from compression of a refrigerant gas and the cooling obtained when the gas is expanded again. Indeed, the core of such a heat pump is a loop of refrigerant pumped through a vapor-compression refrigeration cycle. A gas at an original temperature is compressed adiabatically and then the generated heat removed. The compressed cooled gas is then expanded so as to cool further to a temperature at which it can receive heat (via a heat exchanger) from an environment that is relatively cool already, e.g. the atmosphere or the ground, but warmer than the cooled gas. As the gas is then re-compressed its temperature rises to above the original temperature, representing the heat received in its cooled state. Via a further heat exchanger the heat can then be transferred to a further circuit for heating a room or the like.

In such systems, the earth is used as a heat source (in the winter) or a heat sink (in the summer). Advantage is taken of the moderate temperatures in the ground to boost efficiency and reduce the operational costs of heating and cooling systems. In some cases they may be combined with solar heating to form a geosolar system with even greater efficiency, or used alone when the heating or cooling requirements allow. Ground source heat pumps harvest heat absorbed at the earth's surface from solar energy. The temperature in the ground below 6 metres (20 ft) is roughly equal to the mean annual air temperature at that latitude at the surface. Therefore, depending on latitude, the temperature beneath the upper 6 metres (20 ft) of the Earth's surface maintains a nearly constant temperature between 10 and 16 °C (50 and 60 °F), if the temperature is undisturbed by the presence of a heat pump.

In some cases, as well as the earth, the atmosphere or air can also be used as a heat source. Air-source heat pumps are typically more efficient at heating than pure electric heaters, even when extracting heat from cold winter air, although efficiencies begin dropping significantly as outside air temperatures drop below 5 °C (41 °F). A ground source heat pump is more energy-efficient because underground temperatures are more stable than air temperatures through the year.

Although ground source heat pumps extract ground heat in the winter (for heating) and transfer heat back into the ground in the summer (for cooling), systems can also be designed to operate in one mode only, heating or cooling, depending on climate.

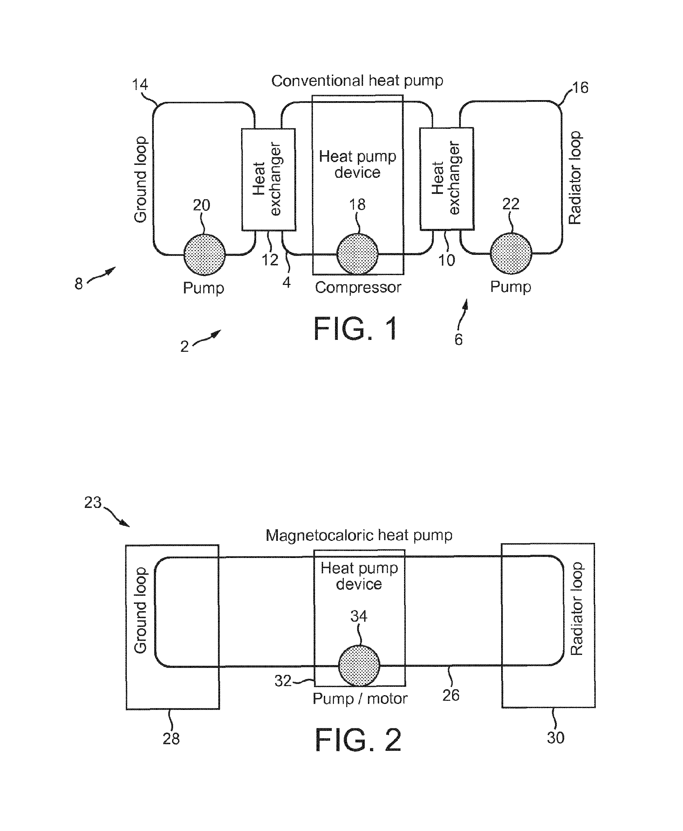

Figure 1 shows a schematic representation of a conventional ground source heat pump 2. The pump 2 has a closed compression and evaporation circuit 4 having a hot side 6 and a cold side 8. A hot side heat exchanger 10 and a cold side heat exchanger 12 are provided. A cold side loop 14 buried in the ground and a hot side or radiator loop 16 are also provided. The radiator loop 16 is arranged to provide heat from a radiator inside a room or under-floor heating. A compressor motor 18 is provided and in addition to this, both the ground loop 14 and hot side loop 16 have circulation pumps 20 and 22 respectively, which serve to move heat transfer fluid around the respective loops. The heat exchangers 12 and 10 provide some means for heat to be transferred from the refrigerant fluid circulating in the compression and evaporation circuit 4 and the respective fluids in the ground loops and radiator loops 14 and 16 respectively.

Three pumps are needed, one for each of the individual loops. In addition, transferring the heat through the heat exchangers on either side of the compression and evaporation loop 4, will incur efficiency losses.

Magnetocaloric refrigerators are known and can be used instead of a gas compression cycle in a heat pump. Examples of known magnetocaloric refrigerators include those described in WO-A-2010/086399 and WO-A-2009/024412.

In WO-A-2010/086399, there is disclosed a parallel magnetic refrigerator assembly, including at least: a first magnetocaloric stage having in use a cold side and a hot side; a second magnetocaloric stage having in use a cold side and a hot side, arranged in parallel connection with the first magnetocaloric stage; the first and second magnetocaloric stages each including a hot side heat exchange circuit for carrying a heat exchange fluid to receive heat from the magnetocaloric stages and a cold side heat exchange circuit for carrying a heat exchange fluid to transfer heat to the magnetocaloric stages; wherein the hot side heat exchange circuit is configured such that in use a heat exchange fluid passes in thermal contact with the hot side of both the first and second magnetocaloric stages and the cold side heat exchange circuit is configured such that in use a heat exchange fluid passes in thermal contact with the cold side of both the first and second magnetocaloric stages. The first and second AMR stages have substantially the same temperature span but different cold end and hot end temperatures. In this way the device temperature span may be substantially larger than the individual temperature span of each AMR stage.

In WO-A-2009/024412, there is disclosed a refrigeration device, comprising: a magnetic field source; a magnetocaloric bed, one of the magnetocaloric bed and the magnetic field source being arranged to substantially surround the other, the magnetocaloric bed being arranged for relative rotation with respect to the magnetic field source such that during said relative rotation, the magnetic field experienced by parts of the magnetocaloric bed varies; plural pathways formed within the magnetocaloric bed for the flow of a working fluid during the relative rotation between the magnetocaloric bed and the permanent magnet; and a flow distributor placed at each end of the magnetocaloric bed, for controlling the part of the magnetocaloric bed able to receive working fluid during a cycle of operation.

Other examples of magnetocaloric refrigerators and/or heat pumps include WO-A-03/050456, US-A-2012/0023969, US-A-2005/0120720, US-A-2008/0236172, US-A-2007/0130960 and US-A-2007/0186560.

Some means for improving the efficiency of heat pumps is desired.

According to a first aspect of the present invention, there is provided a magnetocaloric heat pump device, comprising a magnetocaloric bed; a magnetic field source, the magnetocaloric bed and the magnetic field source being arranged to move relative to each other so as to generate a magnetocaloric refrigeration cycle within the heat pump, wherein the magnetic field source includes both a permanent magnet and an electromagnet.

A magnetocaloric heat pump device is provided that includes a hybrid magnetic field source, i.e. it includes both a permanent magnet and an electromagnet. The use of a hybrid magnetic field source is particularly advantageous as it enables the heat pump device to operate in plural modes. In a first mode the device can operate without the electromagnet at all. The source of the magnetic field used to heat and cool the magnetocaloric bed is simply the permanent magnet. However, the field can be augmented with the use of the electromagnet. In addition, heat that will inevitably be generated by the electromagnet in use, instead of representing a reduction in efficiency, represents an increase in efficiency since this additional heat can be harnessed and used to increase the heat output of the heat pump device. Instead of representing a parasitic loss, the heat generated in the electromagnet is used as additional heat output from the heat pump device.

Preferably, the magnetocaloric heat pump device comprises a fluid conduit for the passage of a heat transfer fluid within the heat pump, wherein the fluid conduit is in thermal communication with the electromagnet.

The use of a fluid conduit arranged in thermal communication with the electromagnet provides a simple and robust means for transferring the heat generated in the electromagnet to the heat transfer fluid as it flows through the heat pump device

Preferably, the magnetic field source provides a magnetic circuit. It may be generally ring-shaped and has regions or sectors formed by permanent magnets.

Preferably, the entire ring is formed of permanent magnets.

Preferably, the magnetocaloric heat pump device comprises axial grooves in which are provided one or more electromagnets.

Preferably, the magnetocaloric bed is arranged to move rotationally and/or translationally with respect to the magnetic field source. In one example, the magnetocaloric bed is arranged to move translationally in an axial direction into and out of the ring.

Preferably, the magnetic field source comprises permanent magnets spaced alternately with electromagnet around the ring.

Preferably, the magnetic field source has a C-shaped frame.

Preferably, at least part of the c-shape is formed of permanent magnet. The c-shaped core is advantageous since it provides a simple way by which the generated magnetic field can be directed and focussed on a certain area, i.e. the area in which at a rest position the magnetocaloric bed is positioned.

Preferably, the electromagnet is formed by a coil arranged around a part of the c-shape frame. Wrapping the coil around the c-shape core provides a simple way to arrange the electromagnet in the hybrid field source. By doing it this way the field from the electromagnet will automatically be directed along and guided by the core so as to achieve the desired augmenting effect.

Preferably, the frame has an opening defining a region for movement of the magnetocaloric bed.

Preferably, the frame has an opening defining a region for movement of the magnetocaloric bed and in which the magnetocaloric bed has a coil wrapped around it forming the electromagnet. This is a simple way of achieving a hybrid magnetic field source and can be used in a system originally built to have a simple permanent magnet as the source of magnetic field. The electromagnet surrounds the magnetocaloric bed and moves with it relative to the permanent magnet. By selectively switching the electromagnet on and off, the field it provides can be correspondingly controlled to achieve the desired effect.

According to a second aspect of the present invention, there is provided a heating or cooling system, comprising: a magnetocaloric heat pump device according to the first aspect of the present invention (including any one or more or none of the preferred features); a hot side loop coupled to a first side of the magnetocaloric heat pump device and being arranged to receive heated liquid from the magnetocaloric heat pump; a cold side loop coupled to a second side of the magnetocaloric heat pump device and being arranged to receive cooled liquid from the magnetocaloric heat pump, the cold side loop being formed of a heat conductive conduit so as to be able to absorb heat into the cooled liquid.

A heating or cooling system is provided that includes the magnetocaloric heat pump device according to the first aspect of the present invention. The heating or cooling system may include including any number of the preferred features of the first aspect of the present invention. The heating or cooling system therefore shares the advantages expressed above. In particular, it is efficient and easy to use. It relies upon use of a hybrid magnetic field source, i.e. it including both a permanent magnet and an electromagnet.

It is particularly advantageous in its use in domestic or commercial heating which are important applications and for which there is a desire to loosen the reliance upon fossil fuel based energy systems. The use of an efficient heat pump such as that of the present system addresses this issue.

Preferably, the hot side lop and the cold side loop form a single continuous conduit.

Preferably, the heating or cooling system comprises a single pump for pumping a heat transfer fluid around the continuous conduit.

Preferably, the heating or cooling system comprises a heat transfer fluid for flowing in the system, the heat transfer fluid being liquid at all stages within the system. According to a third aspect of the present invention, there is provided a magnetocaloric heat pump assembly, comprising: a magnetocaloric heat pump device comprising a magnetic field source and a magnetocaloric bed arranged to move relative to the magnetic field source so as to generate a magnetic refrigeration cycle; a first heat conductive loop for the flow of heat transfer fluid, the first heat conductive loop being arranged to receive cooled heat transfer fluid from the magnetocaloric heat pump device and provide heated heat transfer fluid to the magnetocaloric heat pump device; a second heat conductive loop for the flow of heat transfer fluid, the second heat conductive loop being arranged to receive heated heat transfer fluid from the magnetocaloric heat pump device and provide cooled heat transfer fluid to the magnetocaloric heat pump device; wherein the in combination the first and second heat conductive loops and the magnetocaloric heat pump device define a continuous circuit for the flow of heat transfer fluid and wherein in use the heat transfer fluid remains in a single liquid phase at all stages of its passage along the continuous circuit.

A single phase single circuit heat pump assembly is provided. In contrast to known systems, e.g. such as that shown in Figure 1, where plural pumps and heat exchangers are provided, in this aspect a single circuit single phase system is provided. Heat exchangers inevitably are less than 100% efficient. By doing away with the need for internal heat exchangers, i.e. the heat exchangers conventionally used to transfer heat to and from the central refrigeration loop, the efficiency is increased.

Preferably, the magnetocaloric heat pump assembly comprises a single pump for the heat transfer fluid the pump being controllable in use to pump heat transfer fluid around the entire length of the continuous circuit.

Using a single pump is advantageous since it reduces the parts count for the system.

Preferably, the magnetic field source is a hybrid magnetic field source including at least one permanent magnet and at least one electromagnet.

Preferably, the magnetocaloric heat pump device defines passages for heat transfer fluid through the magnetocaloric heat pump device, said passages being in thermal communication with the at least one electromagnet.

According to a further aspect of the present invention, there is provided a method of operating a magnetocaloric heat pump having a magnetocaloric bed and a hybrid magnetic field source (i.e. including both a permanent magnet and an electromagnet), the method comprising moving the magnetocaloric bed and the magnetic field source relative to each other whilst pumping heat transfer fluid through the heat pump so as to generate a magnetocaloric refrigeration cycle within the heat pump.

Preferably the heat pump is operated with only the permanent magnet acting as the field source. When additional power is required, the electromagnet may be switched on to increase the magnetocaloric output. The switching on of the electromagnet may also be used to supply resistive heating.

According to a further aspect of the present invention, there is provided a heat pump assembly comprising: a magnetocaloric heat pump device comprising a magnetocaloric bed and a hybrid magnetic field source; a hot side loop coupled to a first side of the magnetocaloric heat pump device; and a cold side loop coupled to a second side of the magnetocaloric heat pump device.

Embodiments of the present invention will now be described in detail with reference to the accompanying drawings, in which:
Figure 1 is a schematic representation of a conventional heat pump;
Figure 2 is a schematic representation of a magnetocaloric single phase, single circuit heat pump;
Figure 3 is a schematic representation of a heat pump including a hybrid magnetic field source;
Figure 4A to 4E are examples of magnet configurations within and for use with magnetocaloric heat pumps;
Figures 5A and 5B show schematic representations of a heat transfer fluid being pumped through an electromagnet and a magnetocaloric bed; and
Figure 6 shows an example of a magnetocaloric heat pump including a magnetic field source.

Figure 2 is a schematic representation of an example of single phase single circuit heat pump assembly 23 including a magnetocaloric heat pump device 32 and a single continuous fluid conduit 26. The conduit is continuous in that it provides a continuous path for liquid all the way round the assembly. It need not necessarily (although it can) be unitary, i.e. formed of the same unitary piece of tubing for its entire length. What is important is that the path for the liquid is continuous.

In this example, the single continuous circuit 26 defines a single unitary loop through which a single heat transfer fluid is arranged to flow. At all times during its passage along the circuit 26 the heat transfer fluid is liquid, i.e. in a single phase. The single unitary loop comprises a first region 28 referred to as the ground loop, and a second region 30 referred to as the radiator loop. These terms are used because typically, in use, the ground loop will be buried in the ground outside a building to be heated and the radiator loop will be arranged to provide radiated heat to a room inside the building. The radiator loop would typically be buried or arranged within the floor of a room such as to provide under-floor heating or alternatively, could be integrated into a wall of a room.

The heat pump device 32 typically includes a motor and pump 34 for pumping the heat transfer fluid around the loop 26. An example of a suitable heat pump device will be described below.

The motor is needed to operate the heat pump device, and the fluid pump (also designated 34) is needed to move fluid around the loop 26. In some systems, the motor to operate the heat pump and the fluid pump are combined into a single component, although they could also be provided as separate devices. Thus, the present system provides a magnetocaloric heat pump assembly that obviates the need for at least one pump (and possibly two) as well as the two heat exchangers described above with reference to Figure 1. By maintaining the heat transfer fluid in a single phase throughout its journey around the heat pump, it is possible to do without the heat exchangers used in conventional vapour compression heat pumps. Furthermore, the system is inevitably more efficient than systems such as that of Figure 1, since no energy is lost due to inefficiencies in the heat exchangers between circuits.

The parts of the loop 26 are dimensioned to correspond with each other and so as to achieve the desired effect. Clearly, the length of tubing used in the ground loop 28 will depend on many factors, such as the amount of heat required and the likely temperature of the ground. Similarly, the length of tubing provided in the radiator loop 30 will depend on the size of the room or area to be heated. Thus, all parts of the loop are dimensioned in accordance with each other and with the power output needs. Some bypass functionality may be provided to balance different requirements on fluid flow by the different parts of the loop 26. For example a shunt can be provided on a part of the loop so as to reduce the flow in certain part. If in normal operation the amount of heat generated is too great for the radiator loop 30, a shunt valve (not shown) can be provided in the loop upstream of the radiator loop to route some of the heated heat transfer fluid elsewhere. In one example, this is used as a separate water heating circuit, discussed below.

Typically, electrical power is supplied to drive the heat pump device 32 and the fluid flow within the assembly. Some fraction of this power is inevitably lost in the form of heating of the components of the heat pump during operation. In the case of a magnetocaloric heat pump, magnetic field sources used within such devices, typically generate some amount of heat. In a magnetocaloric refrigeration device, such heat represents a purely parasitic loss. However, as will be described below, in the present system, the heat generated is harnessed in the heat transfer loop as it is in intimate contact with the device 32 and the magnets within it.

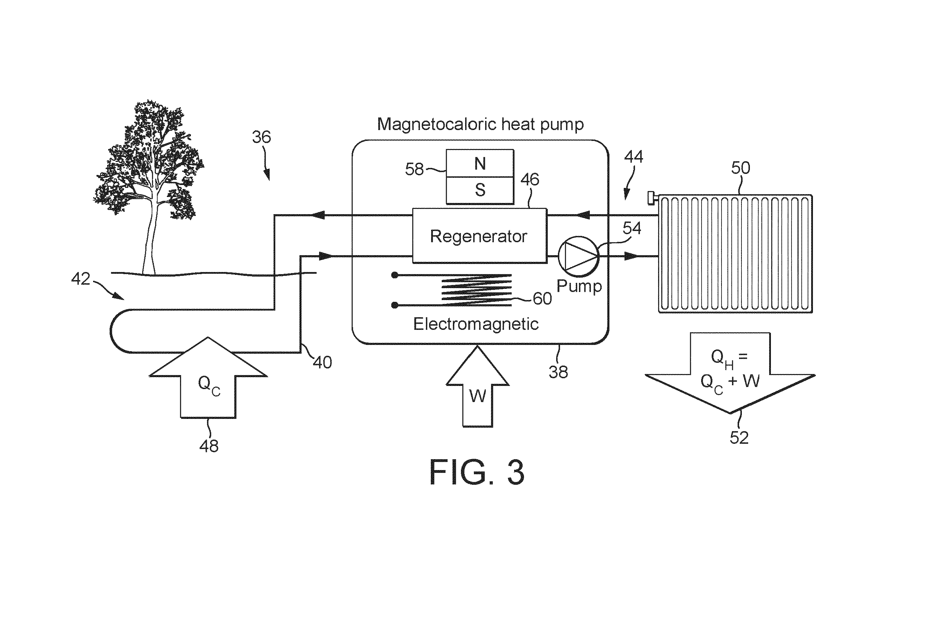

Figure 3 is a more detailed schematic representation of a magnetocaloric heat pump assembly 36. The heat pump assembly 36 includes a magnetocaloric heat pump device 38 arranged within a continuous circuit 40, as described above with reference to Figure 2. The circuit has a ground loop or cold end 42 and a radiator loop or warm end 44. The cold end is typically arranged buried in the ground outside a building to be heated. The cold end 42 typically comprises a conduit such as a pipe made of thermally conductive material such as a metal. A magnetocaloric regenerator 46, to be described below, is provided in place of a conventional gas compression refrigeration circuit.

As described above in terms of the general operation of heat pump, cooled heat transfer fluid enters the conduit from the regenerator 46 and flows through the conduit, picking up heat Q_{C} 48 before returning to the regenerator for onward communication to the radiator loop or warm end 44 of the circuit.

The warm end 44 typically is arranged within a building to be heated and also comprises a liquid flow conduit which would usually be arranged laid into the floor of a building as under floor heating or even integrated within a wall. Alternatively it could simply be provided as an inlet conduit and outlet conduit for a conventional radiator 50 as in the example shown. The amount of heat Q_{H} 52 released into the room is equal to Q_{C} plus W which is the energy provided to the liquid by the regenerator 46.

A single pump 54 is provided in the circuit so as to pump the heat transfer fluid around the circuit and through the regenerator 46. The construction of the regenerator could be of any appropriate form but a particularly preferred embodiment is that as described in our co-pending applications WO-A-2010/086399 and WO-A-2009/024412, referred to above. As will also be explained in detail below, the use of flow distributors at the input and output ends of the regenerator 46 ensure that a continuous unidirectional flow of heat transfer fluid can be achieved which enhances the efficiency of the device.

In this example, the magnetocaloric heat pump device 38 includes both the magnetocaloric regenerator 46 and the pump 54. In fact though, the pump 54 could be provided at any point along the circuit 40.

The regenerator 46 is of any appropriate type and could be of the types described in WO-A-2010/086399 and WO-A-2009/024412, described above. The magnetic field source 56 is said to be hybrid as it comprises both a permanent magnet 58 and an electromagnet 60. This is particularly advantageous. The use of a permanent magnet 58 means that the device can operate simply by relative movement of the magnetocaloric element with respect to the permanent magnetic field source 58. In other words, it can operate without any application of electrical power to the electromagnet.

In addition, the electromagnet 60 can be used to augment the magnetic field from the permanent magnet 58 applied to the magnetocaloric bed within the regenerator 46. The electromagnet 60, in use, will generate heat. In a conventional magnetic refrigerator, this heat is a purely parasitic loss. It reduces the efficiency of the device since it generates heat when the aim of the device is purely to refrigerate. However, in the present case, the use of a hybrid magnetic field source means that the efficiency can be increased since any heat generated by either the permanent or electromagnet can be transferred to the heat transfer fluid as an addition to the heat picked up by the fluid in the cold end 34 of the circuit 32 and as a result of the application of the magnetic field to the magnetocaloric bed. The magnetocaloric heat pump device typically defines passages for heat transfer fluid through it, e.g. within the magnetocaloric bed. The passages are in thermal communication with the at least one electromagnet. In a preferred embodiment the electromagnets are surrounding or close enough in the device to the magnetocaloric bed, so in normal use the heat transfer fluid as it passes through the device will be able to receive heat from the electromagnet. In other words, the heat transfer fluid is arranged to be in thermal communication with the electromagnet as the heat transfer fluid passes through the regenerator 46.

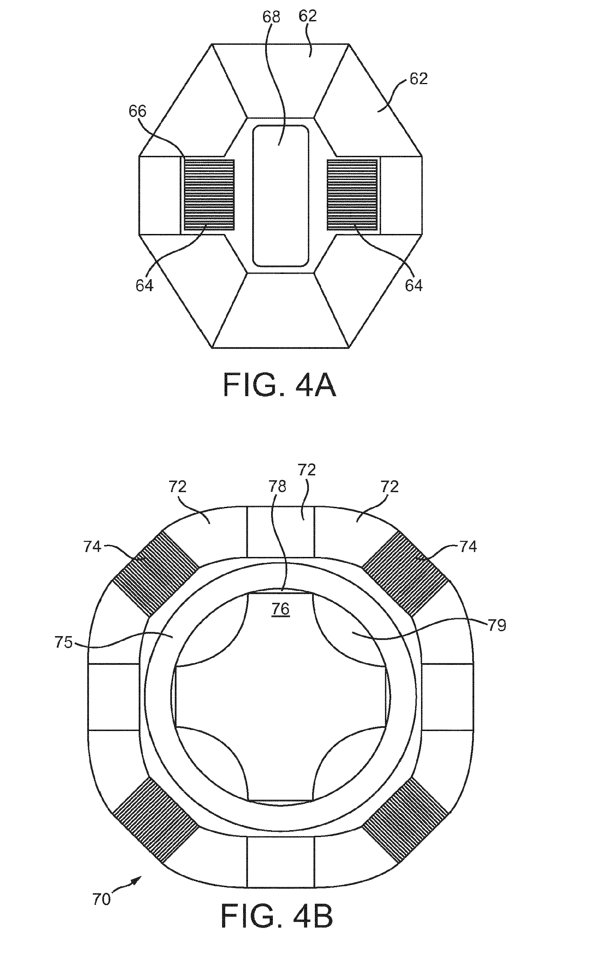

Figures 4A to 4E show in more detail some non-limiting examples of hybrid magnetic field sources for use in a magnetocaloric heat pump. Examples are shown which would operate with translational and/or rotational relative movement between the magnetic field source and the magnetocaloric bed.

Figure 4A shows a first example of a hybrid magnetic field source. The magnetic field source includes both permanent magnets 62 and electromagnets 64 making up a generally octagonal ring-shape magnet arrangement. The electromagnets 64 are arranged within regions 66 defined by the neighbouring permanent magnets. A magnetocaloric bed or component 68 is provided and arranged to move linearly with respect to the generally octagonal magnet arrangement such as to vary the magnetic field to which it is exposed and thereby enable generation, together with flow of heat transfer fluid, a magnetocaloric refrigeration or heating cycle.

It will be appreciated that the device will work even when no power is provided to the electromagnets 64 and the magnetic field source is purely the permanent magnets 54. However, the presence of the electromagnets 64 will augment the magnetic field provided by the field source. This will therefore increase the variation in magnetic field caused by the movement of the magnetocaloric bed 68 into and out of the field source. The electromagnets 64 include one or more coils. Heat is generated in the electromagnets 64 when a voltage is applied to the coils, and this adds to the heat that the heat transfer fluid flowing through the device will already have picked up. Thus, the efficiency of the device will necessarily be increased.

It is of course the heat transfer fluid flowing through the regenerator that receives the additional heat generated by the electromagnets and so it is important that the fluid flow is configured such that the heat transfer fluid flows in thermal communication with the electromagnets. This can be easily achieved by appropriate routing of the heat transfer fluid flow through the device.

Figure 4B shows a further example of a hybrid magnetic field source. In this example, the view is of a transverse cross section through a substantially cylindrical magnet arrangement 70. The magnet arrangement 70 comprises plural permanent magnets 72 and plural electromagnets 74. The magnet arrangement 70 or magnetic field source comprises permanent magnets spaced alternately with electromagnet around the ring. In this example, the entire ring is formed of magnets of one type or the other and even without use of the electromagnets, in the annular region between the central core (described below) and the magnet arrangement 62 there is a varying magnetic field. Accordingly, the device can be used to generate a magnetocaloric refrigeration cycle even without use of the electromagnets. However, the use of the electromagnets will augment the field from the permanent magnets and therefore increase the delta field and the magnetocaloric effect experienced by the magnetocaloric bed or component (not shown in this example).

A central core is provided including a core permanent magnet 76. A generally annular region is defined between the core and the substantially cylindrical magnet arrangement 70, within which is arranged a generally cylindrical magnetocaloric bed (not shown). The magnetocaloric bed is arranged to rotate about the longitudinal axis of the device (perpendicular to the page) so that each point within it experiences a varying magnetic field during a cycle and thereby undergoes both adiabatic heating (upon application of a magnetic field) and cooling (upon removal of the field).

A high field region 78 exists between the permanent magnets 72 and the core 76 extending in in a generally radially direction. A low field region 79 will exist between the electromagnet 74 and the core 76. Thus, the arrangement provides a further example of a hybrid magnetic field source for use in a magnetic heat pump.

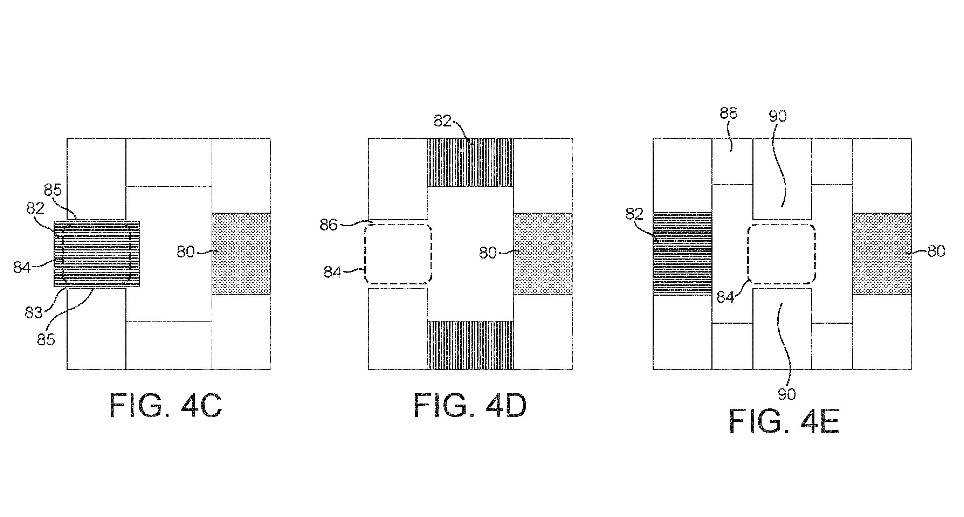

In Figure 4C an iron generally C-shaped core is provided. A permanent magnet 80 is provided together with an electromagnet 82. A magnetocaloric bed or active magnetic regenerator 84 is provided and in this example is surrounded by the coil(s) of the electromagnet 82. The magnetocaloric bed 84 is moved translationally and cyclically into and out of the region 83 between the end faces 85 of the C-shaped core. The magnetocaloric bed is therefore cyclically exposed to and removed from the field guided by the core from the permanent magnet 80.

In addition by selective switching on or off of the electromagnet the permanent magnetic field can be added to as required. Thus, when the magnetocaloric bed and electromagnet are in the field region 83, the electromagnet is switched on augmenting the magnetic field to which the magnetocaloric bed is exposed. When the magnetocaloric bed is moved out of the region 83, the electromagnet is switched off thereby removing any magnetic field that it can provide. The total field to which the magnetocaloric bed is exposed (when in region 83) is therefore the sum of the fields from the permanent magnet 80 and the electromagnet 82. When outside the region 83, with the electromagnet switched off the magnetocaloric bed is exposed to substantially zero magnetic field.

In Figure 4D, an iron generally C-shaped core is provided. A permanent magnet 80 is provided together with an electromagnet 82. An active magnetic regenerator or magnetocaloric bed 84 is provided and can be moved into or out of the field region 86 so as to vary the magnetic field to which it is exposed.

Figure 4E shows a further example. In this case, the construction of the core 88 is different in that an H-shaped region is provided. A magnetic field will be present between the projections 90. A permanent magnet 80 and an electromagnet 82 are provided so as to generate a magnetic field. An active magnetic regenerator 84 is arranged to be moved relative to the projections 90 so as to experience a varying magnetic field and therefore generate the required refrigeration for operation of the heat pump.

Thus, in all the examples shown in Figures 4A to 4E, a hybrid magnetic field source is provided including both one or more permanent magnets and one or more electromagnets. The heat generated in use by the electromagnets as a by-product of the applied voltage, serves to improve the efficiency of the device.

In practice, in one example heat transfer fluid passes through the active magnetic regenerator and then is routed in thermal communication with the electromagnet 82 so as to pick up heat from it.

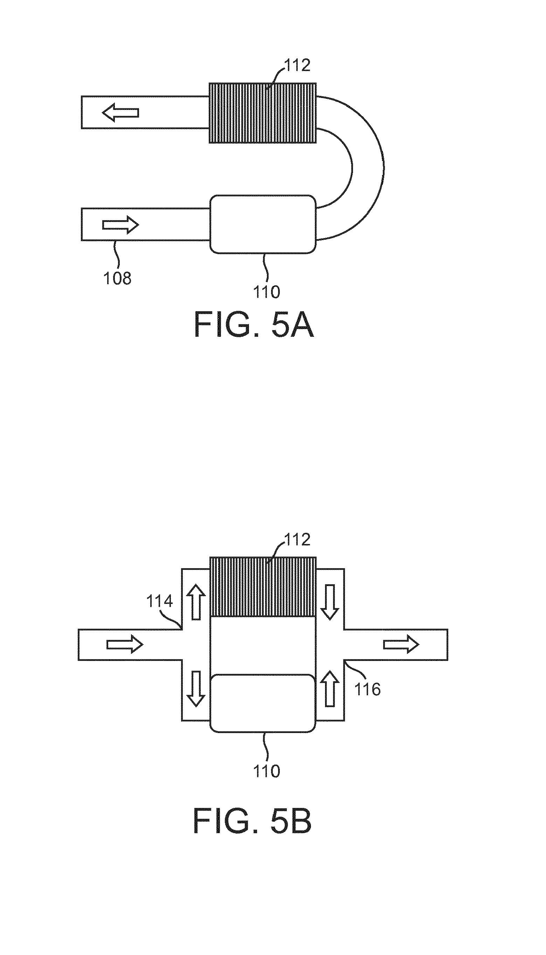

Figures 5A and 5B show schematic representations of how a heat transfer fluid can be brought into thermal engagement with a magnetocaloric bed and electromagnet. In Figure 5A the heat transfer fluid is pumped through a magnetocaloric bed 110 and an electromagnet 112 in succession. In Figure 5B, the heat transfer fluid is pumped through a magnetocaloric bed 110 and an electromagnet 112 in parallel. In both cases a conduit 108 is provided which may be part of the single continuous fluid conduit 26 (see Figure 2) or may be a, loop, spur or branch of it. A loop is preferred as the flow of liquid through it can be returned to the single continuous fluid conduit 26.

In Figure 5A, the flow is in series and so no additional junctions or branches of the conduit 108 are provided. In Figure 5B, due to the parallel nature of the flow of the heat transfer fluid through the magnetocaloric bed and the electromagnet, a splitter 114 is provided in the conduit 108 so as to route the fluid through both components 110 and 112 in parallel. A combiner 116 is provided upstream to recombine the heat transfer fluid into a single conduit for onward propagation. It will be understood that these shown arrangements for heat transfer flow conduits are exemplary and other arrangements or formations could be used in such a way that brings the heat transfer fluid into thermal engagement with the electromagnet.

Last, it is a further advantage of this arrangement that, in addition, the proximity of the electromagnet to the hot end of the magnetocaloric bed, will counteract heat loss from the magnetocaloric bed container or outer housing to the surroundings.

The strategic importance of efficient heat pumps as part of a plan for reducing carbon dioxide emissions has been identified. The present hybrid magnetic field source in which waste heat from the heat pump can be harnessed will serve to increase the overall performance efficiency and therefore satisfy the need for these devices. In particular, in a magnetocaloric heat pump, the heat loss can be harnessed as the heat transfer loop is in intimate contact with the device. Thus this excess heat can either be used to directly heat the heat transfer fluid in its normal cycle in the heat pump, or an auxiliary heat circuit can be used in which a second heat transfer fluid is arranged to pass in thermal communication with the electromagnet and thereby pick up its heat. In addition, no green-house contributing gasses are required or formed by use of the method and apparatus.

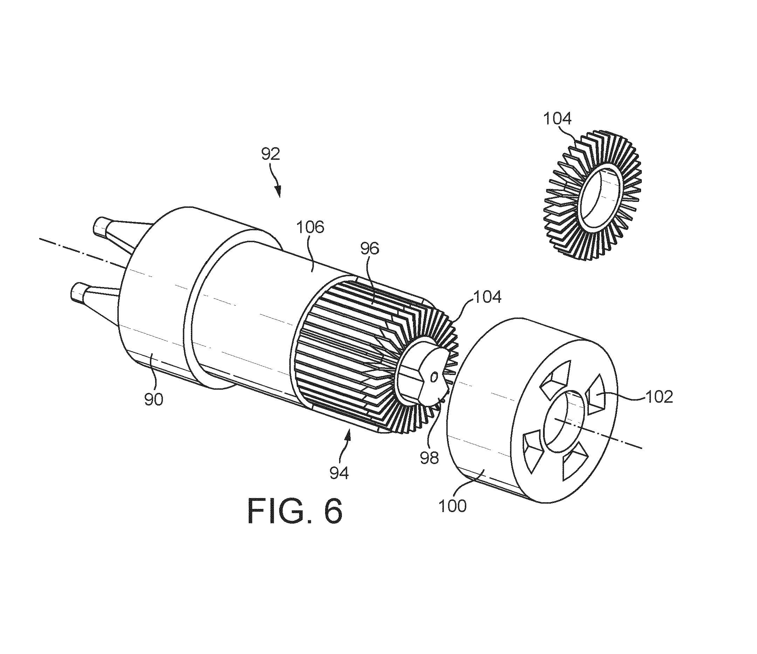

For completeness, an example of a magnetocaloric heat pump device will now be described. Figure 6 shows such a device 92, comprising a magnetocaloric bed 94 in the form of plates 96. The plates 96 define discrete channels or paths for the flow of heat transfer fluid through the device 92. Flow distributors 104 serve to route the flow of liquid into the channels between the plates 96. A core 98 is provided around which the bed 94 rotates. Flow distributor housings 100 are provided which provide fixed housings with openings 102 to which the fluid conduits of the circuits mentioned above, are connected. A housing 106 surrounds the magnetocaloric bed 94. A magnetic field source of the type shown in, say, Figure 4B, is provided around housing 106. As the bed 94 rotates relative to the magnetic field source with heat transfer fluid flowing through, a magnetocaloric cooling cycle is generated which can be used to provide heating as described above.

In the example shown, heat is transferred to the heat transfer fluid from the electromagnets during normal operation. In one example a shunt is taken from one or more of the conduits and routed in close proximity, i.e. thermal contact, with the electromagnets so as to provide the additional heat. In one example an entirely separate fluid circuit and pump is provided, which is arranged to route water close to the electromagnets for heating. Thus, in a domestic environment the main heat pump circuit is used for heating radiators and the separate circuit is used for hot water.

Embodiments of the present invention have been described with particular reference to the examples illustrated. However, it will be appreciated that variations and modifications may be made to the examples described within the scope of the present invention.

## Claims

1. A magnetocaloric heat pump device, comprising
a magnetocaloric bed;
a magnetic field source, the magnetocaloric bed and the magnetic field source being arranged to move relative to each other so as to generate a magnetocaloric refrigeration cycle within the heat pump, wherein the magnetic field source includes a permanent magnet and an electromagnet.

2. A magnetocaloric heat pump device according to claim 1, comprising a fluid conduit for the passage of a heat transfer fluid within the heat pump, wherein the fluid conduit is in thermal communication with the electromagnet.

3. A magnetocaloric heat pump device according to claim 1 or 2, in which the magnetic field source is generally ring-shape and has regions or sectors formed by permanent magnets.

4. A magnetocaloric heat pump device according to claim 3, comprising axial grooves in which are provided one or more electromagnets.

5. A magnetocaloric heat pump device according to claim 3 or 4, in which the magnetocaloric bed is arranged to move translationally in an axial direction into and out of the ring.

6. A magnetocaloric heat pump device according to claim 3, in which the magnetic field source comprises permanent magnets spaced alternately with electromagnet around the ring.

7. A magnetocaloric heat pump device according to claim 1 or 2, in which the magnetic field source has a C-shaped frame and, in which at least part of the c-shape is formed of permanent magnet.

8. A magnetocaloric heat pump device according to claim 7, in which the electromagnet is formed by a coil arranged around a part of the c-shape frame.

9. A magnetocaloric heat pump device according to claim 7, in which the frame has an opening defining a region for movement of the magnetocaloric bed and in which the magnetocaloric bed has a coil wrapped around it forming the electromagnet.

10. A heating or cooling system, comprising:
a magnetocaloric heat pump device according to any of claims 1 to 9;
a hot side loop coupled to a first side of the magnetocaloric heat pump device and being arranged to receive heated liquid from the magnetocaloric heat pump;
a cold side loop coupled to a second side of the magnetocaloric heat pump device and being arranged to receive cooled liquid from the magnetocaloric heat pump, the cold side loop being formed of a heat conductive conduit so as to be able to absorb heat into the cooled liquid.

11. A heating or cooling system according to claim 10, in which the hot side loop and the cold side loop form a single continuous conduit.

12. A heating or cooling system, according to claim 11, comprising a single pump for pumping a heat transfer fluid around the continuous conduit.

13. A heating or cooling system, according to any of claims 10to 12, comprising a heat transfer fluid for flowing in the system, the heat transfer fluid being liquid at all stages within the system.

14. A method of operating a magnetocaloric heat pump having a magnetocaloric bed and a magnetic field source including both a permanent magnet and an electromagnet, the method comprising moving the magnetocaloric bed and the magnetic field source relative to each other whilst pumping heat transfer fluid through the heat pump so as to generate a magnetocaloric refrigeration cycle within the heat pump.

15. A method according to claim 14, comprising operating the heat pump with only the permanent magnet acting as the field source and, when additional power is required, switching on the electromagnet to increase the magnetocaloric output and additionally supply resistive heating.
